# EUROPÄISCHE PATENTSCHRIFT

(11) **EP 1 978 337 B1**
(45) Veröffentlichungstag und Bekanntmachung des Hinweises auf die Patenterteilung: **07.08.2013**
(21) Anmeldenummer: 08009694.4
(22) Anmeldetag: 08.06.2004
(51) Int. Cl.: G01F 1/66

(54) **Ultraschallzähler zur Bestimmung der Durchflussmenge eines strömenden Mediums**
Ultrasound meter for determining the flow rate of a flowing medium
Compteur d'ultrasons destiné à la détermination de la quantité de débit d'un milieu s'écoulant

(30) Priorität: 13.06.2003 DE 10327076; 01.03.2004 DE 102004010408
(43) Veröffentlichungstag der Anmeldung: 08.10.2008
(62) Teilanmeldung aus: 04013456.1
(73) Patentinhaber: Hydrometer GmbH, 91522 Ansbach (DE)
(72) Erfinder: Sonnenberg, Hans-Michael, 90616 Neuhof/Zenn (DE); Meßthaler, Roland, 91575 Windsbach (DE)
(74) Vertreter: Stippl, Hubert

(56) Entgegenhaltungen:
- EP-A- 0 392 294
- EP-A- 0 477 418
- EP-A- 0 897 102
- DE-C1- 10 047 383
- DE-U1- 9 420 760
- US-A- 4 610 167

## Beschreibung

Die vorliegende Erfindung betrifft einen Ultraschallzähler zur Bestimmung der Durchflussmenge eines strömenden Mediums, insbesondere Flüssigkeit oder Gas, mit einem länglichen Gehäuse, welches von dem Medium durchströmt wird, einer innerhalb des Gehäuses angeordneten Messstrecke, entlang der eine Laufzeitmessung, insbesondere Differenzlaufzeitmessung, durchführbar ist, mindestens einem Ultraschallwandler, mindestens einem Umlenkspiegel, der stromaufseitig zum strömenden Medium liegt, mittels dem die Ultraschallwelle des Ultraschallwandlers zum Messrohr hin umgelenkt wird, und ein Umlenkspiegelhalter vorgesehen ist. Bei Differenzlaufzeitmessung erfolgt die gegenläufige Messung entweder über Reflektion des Ultraschallsignals des Ultraschallwandlers oder über ein von einem weiteren Ultraschallwandler abgesandten Ultraschallsignals am gegenüberliegenden Ende der Messstrecke.

Aus der US-A-4 610 167 ist ein Ultraschallzähler gemäß dem Oberbegriff des Anspruchs 1 bekannt. Der Ultraschallzähler umfasst ein einstückiges Teil, welches als integraler Bestandteil desselben reflektierende Oberflächen aufweist. Das Teil wird mittels federnden Abstandhaltern innerhalb des Gehäuses fixiert.

Die EP-A-0 392 294 beschreibt einen Durchflussmesser, in dem eine Mehrzahl von Umlenkspiegel zur Gewährleistung einer Mehrfachreflexion entlang der Innenseite des Messrohrs an diesem fixiert ist.

Die EP-A-0 477 418 beschreibt einen Ultraschallzähler, bei dem eine Reflektoranordnung auf dem Boden einer wannenförmigen Blechkonstruktion angeordnet ist. Die wannenförmige Blechkonstruktion ist vorzugsweise einstückig ausgebildet.

Die DE 195 33 814 A1 beschreibt einen Ultraschallzähler mit einem zylinderförmigen Gehäuse in dem eine ringförmige Messstrecke mit einer Mehrzahl an der Außen- sowie Innenwand der Messstrecke angeordneten Umlenkspiegel angeordnet ist. Die Messstrecke wird gebildet durch einen Gehäuseeinsatz, der zwei identisch ausgebildete, zusammensetzbare Innenteile umfasst, deren Trennebene quer zur Gehäuselängsachse orientiert ist. Da die Innenteile die Ultraschallmessköpfe umgreifen, müssen die Innenteile nacheinander in das Gehäuse eingesetzt werden.

Die DE 201 07 894 U 1 offenbart ein Ultraschallflussmessgerät der gattungsgemäßen Art. Hierbei wird die Oberkante des strömungsabgewandten Umlenkspiegels von dem Medium umströmt, wodurch sich eine Rezirkulationszone bzw. Zonen reduzierter Strömungsgeschwindigkeit im Bereich der Oberfläche des ersten Ablenkspiegels bilden, die Verschmutzungen auf dem Ablenkspiegel verursachen. Hierdurch leidet die Langzeitstabilität des Ultraschallflussmessgerätes.

Die DE 199 30 278 A1 beschreibt einen Ultraschallzähler mit einem ersten Umlenkspiegel, welcher parallel zum Strömungsverlauf ausgerichtete Bohrungen beinhaltet, die einer Verschmutzung des Umlenkspiegels entgegenwirken sollen. Die darin beschriebenen Umlenkspiegel sind allerdings in ihrer Fertigung sehr aufwendig, da eine Vielzahl von Bohrungen, die nicht senkrecht zur Spiegelebene stehen, eingebracht werden müssen.

Die Aufgabe der vorliegenden Erfindung besteht darin, einen neuartigen Ultraschallzähler zur Verfügung zu stellen, welcher einfach und kostengünstig herzustellen ist.

Die vorstehende Aufgabe wird beim gattungsgemäßen Ultraschallzähler dadurch gelöst, dass der Umlenkspiegelhalter aus zwei in Längsrichtung zum Gehäuse getrennten Hälften aufgebaut ist, die zweckmäßigerweise entlang einer längs verlaufenden Trennlinie zusammengesetzt werden können. Dies erleichtert zum einen den Einsatz des Spiegels sowie zum anderen die Herstellung des Umlenkspiegelhalters als aufwendig geformtes Kunststoffformteil. Auch können identische Hälften für zusätzliche Umlenkspiegel im Ultraschallzähler vorgesehen sein. Diese Idee ermöglicht eine optimale Fixierung der Umlenkspiegel, was eine wichtige Voraussetzung zur Gewährleistung einer Langzeitstabilität des Ultraschallzählers ist.

Wenn der Umlenkspiegelhalter Mittel zur Fixierung des Messrohrs aufweist, ist vorteilhafterweise keine Gehäusebearbeitung notwendig.

Ferner können die thermischen Ausdehnungskoeffizienten von Spiegelhalter, Gehäuse und/oder Spiegel angepasst sein.

Der Umlenkspiegel weist zweckmäßigerweise parallele Halteflächen auf. Er kann z. B. vieleckig, insbesondere achteckig ausgebildet sein, wodurch bessere Fixiergenauigkeiten beim Einbau erreicht werden. Die Fixierung des Spiegels erfolgt hierbei z. B. formschlüssig entweder über die vier rechtwinkeligen Flächen oder über die vier diagonalen Flächen.

Weiterhin können durch entsprechende Taschen im Halter die Spiegel formschlüssig gehalten werden, was die Langzeitstabilität erhöht.

Die Haltestege am Umlenkspiegelhalter können siebförmig oder als Strömungsgleichrichter ausgebildet sein.

Der Gegenstand des Anspruchs 4 hat den Vorteil, dass - aufgrund der besonderen Fixierung - eine reduzierte Toleranz der Bauteile möglich wird.

Eine weitere zweckmäßige Ausführungsform der vorliegenden Erfindung ist dadurch gekennzeichnet, dass Umlenkspiegelhalter, Umlenkspiegel sowie

Messrohr als Einheit aus dem Gehäuse des Ultraschallzählers heraus- bzw. in dieses hineinschiebbar sind und zwar insbesondere ohne Demontage des jeweiligen Ultraschallwandlers. Die Wartung und der Service werden hierdurch ganz besonders vereinfacht.

Zweckmäßigerweise befindet bzw. befinden sich der oder die Ultraschallwandler im Gehäuse des Ultraschallzählers, beispielsweise bündig mit der Innenoberfläche des Messrohrs verlaufend oder weiter nach innen in das Gehäuse des Ultraschallzählers hinein versetzt.

Der Umlenkspiegelhalter ist von mindestens einem, vorzugsweise zwei Dichtringen umgeben, die zum einen eine Dichtwirkung des Umlenkspiegelhalters zum Gehäuse des Ultraschallzählers bewirken, zum anderen die Einheit bestehend aus Umlenkspiegelhalter, Umlenkspiegel und Messrohr zusammenhalten, so dass diese beim Einsetzen bzw. Herausziehen besonders einfach handhabbar ist.

Eine Ausgestaltung der vorliegenden Erfindung wird nachstehend anhand von Zeichnungen näher erläutert.

Es zeigen:
- Fig. 1: eine Schnittdarstellung eines Ultraschallzählers der vorstehend beschriebenen Art;
- Fig. 2: zeigt einen Umlenkspiegel sowie Umlenkspiegelhalter bei einer Ausführungsform eines Ultraschallzählers;
- Fig. 3: zeigt eine Ausgestaltung eines Umlenkspiegels sowie Umlenkspiegelhalters gemäß der Erfindung in Längsschnittdarstellung (Fig. 3 A), in stirnseitiger Draufsicht auf den Umlenkspiegel (Fig. 3 B) sowie eine Hälfte des Umlenkspiegelhalters in perspektivischer Darstellungsweise (Fig. 3 C);
- Fig. 4: eine Ausgestaltung des erfindungsgemäßen Ultraschallzählers im Längsschnitt sowie perspektivischer Darstellung mit Messeinsatz;
- Fig. 5: den Messeinsatz des Ultraschallzählers gemäß Fig. 4 im ausgebauten Zustand sowie
- Fig. 6: den Bereich des Umlenkspiegelhalters des Ultraschallzählers nach Fig. 6 in stromaufseitiger Draufsicht.

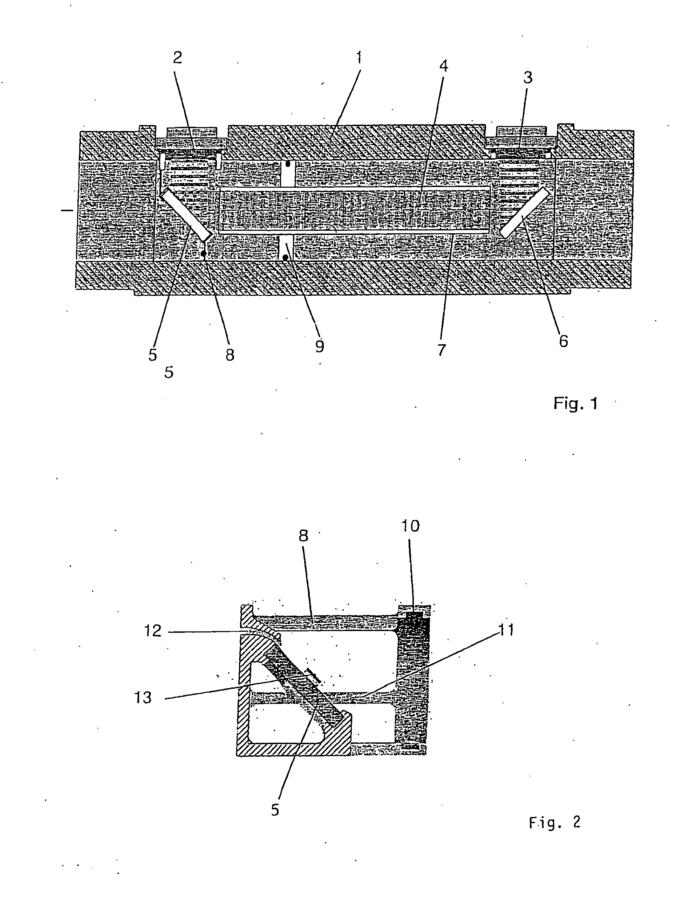

Die Darstellung in Fig. 1 zeigt einen gattungsgemäßen Ultraschallzähler mit einem Gehäuse 1, einem Ultraschallwandler 2 sowie einem weiteren Ultraschallwandler 3, welche jeweils über hierfür vorgesehene Gehäuseöffnungen in der Seitenwandung des Gehäuses 1 eingesetzt und durch zugehörige Abdeckungen mit Dichtungen in der Wandung des Gehäuses 1 gehalten sind.

Dem Ultraschallwandler 2 ist ein Umlenkspiegel 5, dem weiteren Ultraschallwandler 3 ein weiterer Umlenkspiegel 6 zugeordnet. Die Messstrecke 4 (d. h. der Weg der Schallsignale) verläuft vom Ultraschallwandler 2 zum Umlenkspiegel 5, von Letzterem zum weiteren Umlenkspiegel 6 und von diesem zum weiteren Wandler 3 und von diesem gegenläufig zurück. Die Messstrecke 4 hat demzufolge eine U-Form. Es können aber im Rahmen der Erfindung auch weitere Spiegel (nicht dargestellt) und eine diagonal verlaufende Schallführung vorhanden sein (nicht dargestellt).

Der Bereich zwischen beiden Umlenkspiegeln 5 bzw. 6 der Messstrecke 4 wird von einem Messrohr 7 umgeben, welches über einen Messrohrhalter 9 im Gehäuse 1 gehalten wird.

Das Medium, z. B. Brauchwasser, fließt über einen nicht dargestellten Einlauf in der Darstellung von Fig. 1 von links ein, umströmt den Umlenkspiegel 5, strömt entlang der Messstrecke 4, umströmt den weiteren Umlenkspiegel 6 und verlässt den Ultraschallzähler im Bereich des (ebenfalls nicht dargestellten) Auslasses. Die Umlenkspiegel 5 bzw. 6 werden jeweils von einem Umlenkspiegelhalter 8 fixiert, von dem lediglich Umlenkspiegelhalter 8 im Bereich des Umlenkspiegels 5 in Fig. 1 dargestellt ist.

Gemäß Fig. 2 befindet sich im Bereich des Umlenkspiegelhalters 8 eine Düse 12 zur Erzeugung eines Teilstroms, welcher im oberen Bereich der Oberfläche des ersten Umlenkspiegels 5 parallel zu dessen Oberfläche gerichtet ist. Dieser Teilstrom verhindert die Ausbildung von Rezirkulationswirbeln 20 und damit einer Rezirkulationszone. Die Düse weist einen leicht gekrümmten Verlauf auf und verläuft zur Spiegeloberfläche hin mit sich stetig verjüngendem Querschnitt. Die Düse 12 ist zweckmäßigerweise flach ausgebildet, damit der Teilstrom einen breiteren Oberflächenbereich des Umlenkspiegels 5 erfasst.

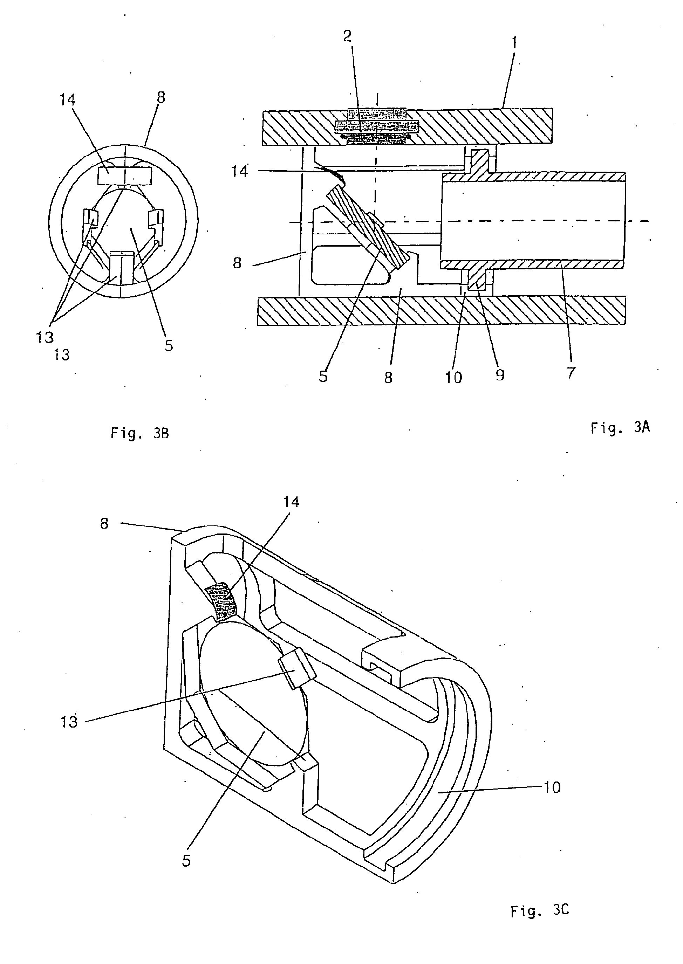

Der Umlenkspiegelhalter 8 ist hülsenförmig ausgebildet und wird axial in das Gehäuse 1 des Ultraschallzählers eingeschoben. Darüber hinaus weist der Halter 8 zweckmäßigerweise - wie in Fig. 2 dargestellt - umfänglich angeordnete, großflächige Durchbrüche auf. In dem der Halterung des Umlenkspiegels 5 gegenüberliegenden Bereich des Umlenkspiegelhalters 8 befindet sich eine umlaufende Vertiefung, die als Aufnahme 10 für einen in Fig. 2 nicht dargestellten Messrohrhalter (Bezugsziffer 9 in Fig. 3 A) dient.

Der Umlenkspiegel 5 wird von einer Mehrzahl von gegenüberliegenden Haltevorsprüngen 13 an jeweils zwei zueinander parallelen Flächen fixiert, von denen in Fig. 2 lediglich zwei der Übersichtlichkeit halber dargestellt sind.

Der Umlenkspiegelhalter besteht zweckmäßigerweise aus einem Material mit hohem Elastizitätsmodul, insbesondere aus Kunststoff, z. B. aus faserverstärkten Kunststoffen wie PES, PSU, PPSU, PPA, PEI, PEEK/PEAK einschließlich deren Derivate PPS oder PPE. Insbesondere kann durch Beimengen von Glas oder Kohlefasern die Wärmeausdehnung dem Gehäuse (typisch Metall) angepasst werden.

Die Haltestege 11 des Umlenkspiegelhalters 8 sind im Querschnitt klein gehalten, beispielsweise kleiner als 4 mm² (z. B. 2 x 2 mm), um den Druckverlust bei der Spiegelumströmung gering zu halten sowie die Stege akustisch vernachlässigen zu können. Die Querschnittsgeometrie der Stege des Umlenkspiegelhalters 8 hat zweckmäßigerweise eine die Verwirbelung des Mediums begünstigende Form, wie dies später noch näher erläutert werden wird.

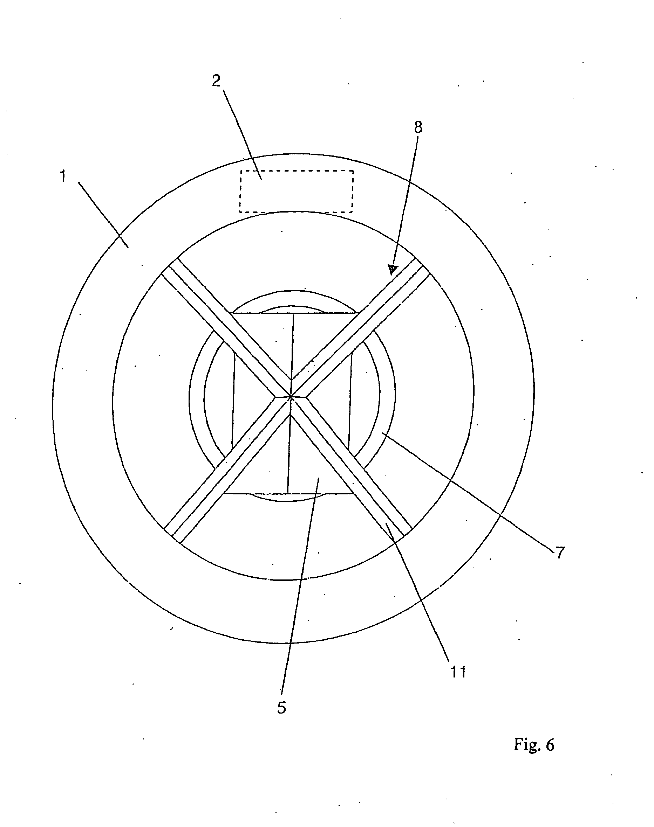

Alternativ können die Stege 11 des Umlenkspiegelhalters 8 - vgl. Fig. 6 - aber auch eine gleichrichtende Wirkung auf die Strömung, insbesondere auf die Einlaufströmung haben.

Auch größere Fremdkörper, die den Ultraschallzähler beschädigen könnten, werden durch die Stege 11 des Umlenkspiegelhalters 8 bzw. deren Anordnung abgefangen. Die Stege 11 können alternativ auch siebförmig ausgebildet sein.

Der in Fig. 3 A dargestellte Umlenkspiegelhalter 8 entspricht dem Umlenkspiegelhalter 8 der Ausgestaltung nach Fig. 2. Anstelle der Düse ist bei der Ausgestaltung nach Fig. 3 A eine Anordnung von Leitflügeln 14 vorgesehen. Diese Leitflügel 14 gewährleisten ebenfalls die Ausbildung einer entsprechenden Teilströmung, die am oberen Ende des Umlenkspiegels 5 parallel zu dessen Oberfläche gerichtet eintritt.

Zur Gewährleistung einer einfachen Herstellbarkeit, insbesondere als Kunststoffformteil, ist der Umlenkspiegelhalter 8 der Ausgestaltung nach Fig. 2 sowie Fig. 3 in Form zweier längsgeschnittener Hälften ausgebildet, wie sich dies aus Fig. 3 B ergibt. Die beiden Hälften sind spiegelsymmetrisch zueinander ausgebildet. Die Leitflügel 14 einer jeden Hälfte des Umlenkspiegelhalters 8 können als zusätzlich vorgesehenes Teil angeordnet sein oder in das Formteil integriert sein.

Aus Fig. 3 A wird darüber hinaus die Befestigung des Messrohrs 7 über dessen Messrohrhalter 9 sowie die Aufnahme 10 für den Messrohrhalter 9 erkennbar. In Fig. 3 B sind identische Merkmale der beiden Hälften des Umlenkspiegelhalters 8 lediglich einmal gezeichnet.

Bis auf den herausgestellten Unterschied gelten alle zu der Ausgestaltung nach Fig. 2 erwähnten Merkmale gleichermaßen auch für die Ausgestaltung nach Fig. 3.

Wie aus den Figuren 3 B sowie 3 C weiterhin hervorgeht, ist der Umlenkspiegel 5 achteckig ausgebildet und wird über entsprechende Haltevorsprünge 13, die an diametral einander gegenüberliegenden parallelen Kanten angreifen, gehalten. Hierdurch wird eine besonders sichere Fixierung des Umlenkspiegels 5 gewährleistet.

Der erste Umlenkspiegel 5 besteht zweckmäßigerweise aus einem Blechteil, welches entweder gestanzt oder wasserstrahlgeschnitten ist.

Die vorstehenden Ausführungen zum ersten Umlenkspiegel 5 gelten in gleicher Weise für die Ausgestaltung des Ultraschallzählers nach Fig. 2 sowie für die nachfolgend beschriebenen Ausgestaltungen.

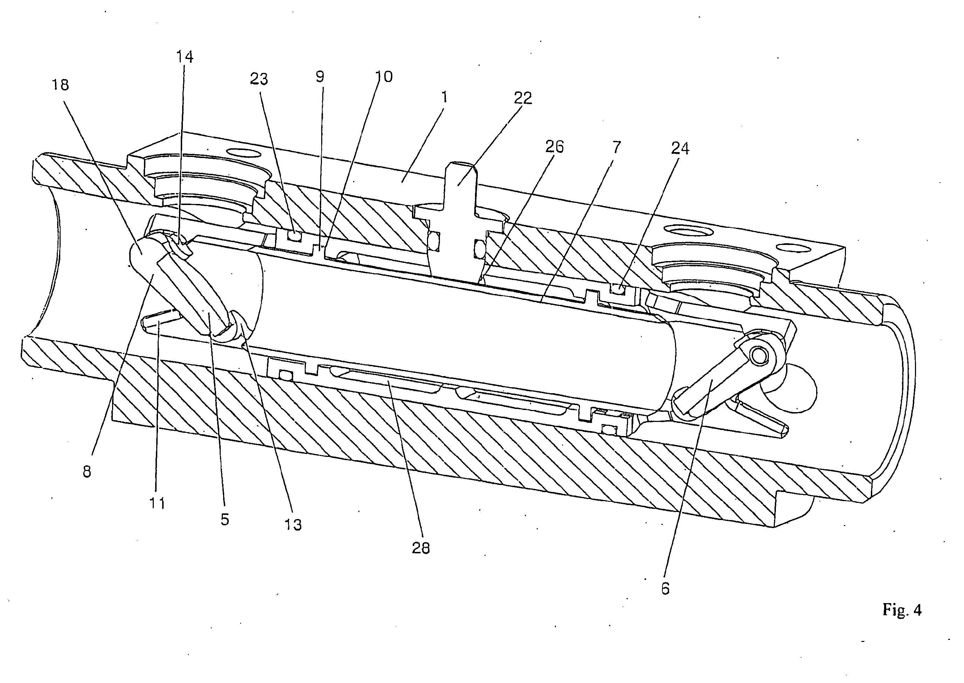

Fig. 4 zeigt eine weitere Ausgestaltung des erfindungsgemäßen Ultraschallzählers im Längsschnitt. Besonders gut zu erkennen ist der stromlinienförmig geformte Umlenkspiegelhalter 8 einschließlich der Haltestege 11. Der Umlenkspiegelhalter 8 ist ein über die Gesamtlänge der Messstrecke 4 ausgebildetes Formteil und umfasst die Aufnahme des Umlenkspiegels 5, die Haltestege 11 sowie die Aufnahme 10 für den Messrohrhalter 9 des Messrohrs 7.

Bei der Ausgestaltung nach Fig. 4 ist der Umlenkspiegelhalter 8 über die Gesamtlänge der Messstrecke 4 ausgebildet, d. h. trägt sowohl den einen Umlenkspiegel 5 als auch den weiteren Umlenkspiegel 6. Darüber hinaus wird der Umlenkspiegelhalter 8 über ein zentral angebrachtes Fixierelement 22 in Position gehalten, wodurch die Bauteile (aufgrund der symmetrischen Fixierung) mit einer reduzierten Toleranz gefertigt werden können.

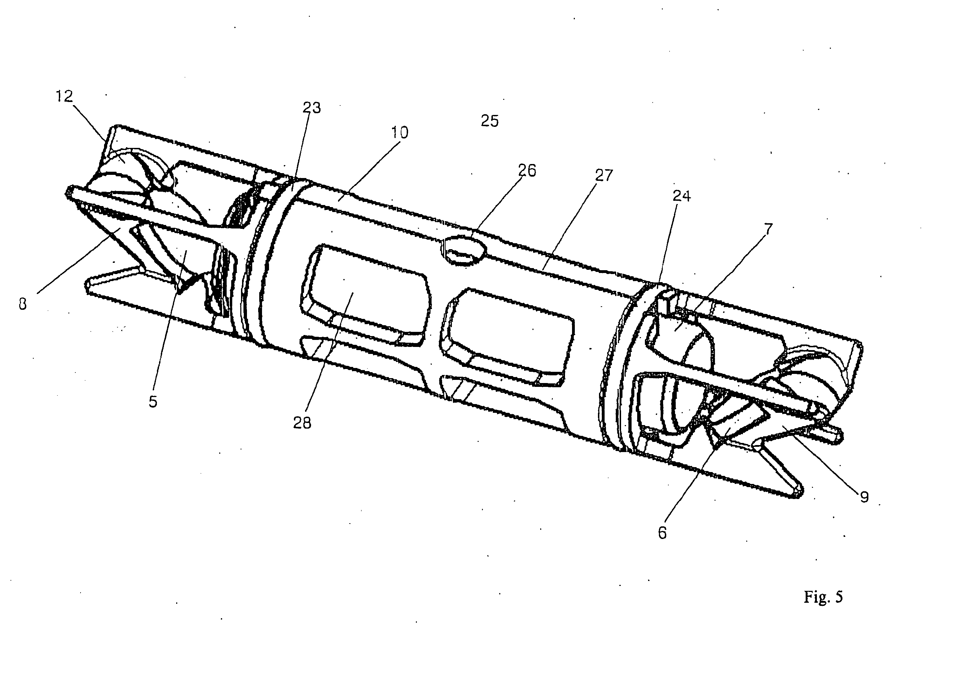

Gleichzeitig nimmt der Umlenkspiegelhalter 8 das Messrohr 7 auf. Hierzu ist der Umlenkspiegelhalter 8 - quer zur Messstrecke 4 betrachtet - zweigeteilt, so dass zwischen die beiden Schalen des Umlenkspiegelhalters 8 der jeweilige Umlenkspiegel 5 bzw. 6 sowie das Messrohr 7 eingesetzt und der hierdurch gebildete Messeinsatz 25, vgl. Fig. 5, durch umlaufende Dichtringe 23, 24 zusammengehalten wird. In dieser Form kann der Messeinsatz 25 in einfacher Weise in das Gehäuse 1 des Ultraschallzählers eingeschoben bzw. herausgenommen werden. Die Dichtringe 23, 24 dienen darüber hinaus zur Abdichtung desjenigen Bereichs des Messeinsatzes 25, an dem das Fixierelement 22 angreift. Der Umlenkspiegelhalter 8 besitzt gemäß Fig. 7 eine Ausnehmung 26, in die das Fixierelement 22 im verriegelten Zustand des Messeinsatzes 25 eingreift. Bezugsziffer 27 bezeichnet die Trennlinie des Umlenkspiegelhalters 8 in Längsrichtung. Der Umlenkspiegelhalter 8 umfasst im Bereich des Messrohrs 7 eine Mehrzahl von Öffnungen 28.

Die Ultraschallwandler 2, 3 sind im Gehäuse 1 des Ultraschallzählers, parallel zur Strömungsrichtung, angeordnet. Hierdurch kann der Messeinsatz 25 aus dem Gehäuse 1 herausgeschoben bzw. in dasselbe eingeschoben werden, ohne dass die Ultraschallwandler 2, 3 demontiert werden müssen.

Figur 6 zeigt eine Draufsicht auf den Umlenkspiegelhalter 8 aus stromaufseitiger Sicht. Der Umlenkspiegelhalter 8 umfasst zwei gekreuzt verlaufende Haltestege 11, mit denen eine Strömungsgleichrichtung erzielt wird. Im Mittelbereich des Umlenkspiegelhalters 8 ist der Umlenkspiegel 5 positioniert.

Verschiedene Merkmale der vorstehend beschriebenen Ausführungsformen des erfindungsgemäßen Ultraschallzählers können in beliebiger Weise untereinander ausgetauscht werden.

Mit der vorliegenden Erfindung wird ein neuartiger Ultraschallzähler zur Verfügung gestellt, der in einfacher und kostengünstiger Weise herzustellen ist. Die Erfindung stellt daher einen ganz wesentlichen Beitrag auf dem einschlägigen Gebiet der Technik dar.

## Patentansprüche

1. Ultraschallzähler zur Bestimmung der Durchflussmenge eines strömenden Mediums, insbesondere einer Flüssigkeit oder eines Gases mit
einem länglichen Gehäuse (1), welches von dem Medium durchströmt wird,
einer innerhalb des Gehäuses (1) angeordneten Messstrecke, entlang der eine Laufzeitmessung, insbesondere Differenzlaufzeitmessung, durchführbar ist,
mindestens einem Ultraschallwandler, mindestens einem Umlenkspiegel(5, 6), mittels dem die Ultraschallwelle des Ultraschallwandlers umgelenkt wird, und
einem Umlenkspiegelhalter (8), der zum axialen Einschieben in das Gehäuse (1) ausgebildet ist
**dadurch gekennzeichnet, dass**
der Umlenkspiegelhalter (8) aus zwei in Längsrichtung zum Gehäuse (1) getrennten, zusammensetzbaren Hälften aufgebaut ist und
der Umlenkspiegel (5, 6) zwischen den Hälften eingesetzt ist.

2. Ultraschallzähler nach Anspruch 1,
**dadurch gekennzeichnet, dass**
der Umlenkspiegelhalter (8) Mittel zur Fixierung eines Messrohrs (7) aufweist.

3. Ultraschallzähler nach einem der vorhergehenden Ansprüche,
**dadurch gekennzeichnet, dass**
der Umlenkspiegel (5) zueinander parallele Montageflächen aufweist.

4. Ultraschallzähler nach einem der vorhergehenden Ansprüche,
**dadurch gekennzeichnet, dass**
der Umlenkspiegelhalter (8) sowohl den einen Umlenkspiegel (5) als auch den weiteren Umlenkspiegel (6) trägt und der Umlenkspiegel über ein insbesondere zentral angeordnetes Fixierelement (22) in Position gehalten wird.

5. Ultraschallzähler nach einem der vorhergehenden Ansprüche,
**dadurch gekennzeichnet, dass**
Umlenkspiegelhalter (8), Umlenkspiegel (5 bzw. 6) und Messrohr (7) als Einheit aus dem Gehäuse (1) des Ultraschallzählers heraus- bzw. in dieses hineinschiebbar sind.

6. Ultraschallzähler nach einem der vorhergehenden Ansprüche,
**dadurch gekennzeichnet, dass**
der Ultraschallwandler (2) oder die Ultraschallwandler sich im Gehäuse (1) des Ultraschallzählers befindet bzw. befinden.

7. Ultraschallzähler nach einem der vorhergehenden Ansprüche,
**dadurch gekennzeichnet, dass**
der Umlenkspiegelhalter (8) von mindestens einem, vorzugsweise zwei Dichtringen (23, 24) umgeben ist.

## Claims

1. Ultrasound meter for determining the flow rate of a flowing medium, in particular a liquid or a gas, having
an elongated housing (1), through which the medium flows,
a measuring section arranged within the housing (1), along which a propagation time measurement, in particular a differential propagation time measurement, can be carried out,
at least one ultrasonic transducer, at least one deflection mirror (5, 6) by means of which the ultrasound wave from the ultrasonic transducer is deflected, and
a deflection mirror holder (8), which is designed to be inserted axially into the housing (1),
**characterized in that**
the deflection mirror holder (8) is built up from two halves that are separated in the longitudinal direction with respect to the housing (1) and can be put together, and
the deflection mirror (5, 6) is inserted between the halves.

2. Ultrasound meter according to Claim 1,
**characterized in that**
the deflection mirror holder (8) has means for fixing a measuring tube (7).

3. Ultrasound meter according to one of the preceding claims,
**characterized in that**
the deflection mirror (5) has mutually parallel mounting faces.

4. Ultrasound meter according to one of the preceding claims,
**characterized in that**
the deflection mirror holder (8) carries both the one deflection mirror (5) and the further deflection mirror (6), and the deflection mirror is held in position via an in particular centrally arranged fixing element (22).

5. Ultrasound meter according to one of the preceding claims,
**characterized in that**
deflection mirror holder (8), deflection mirror (5 and 6) and measuring tube (7) can be drawn out of the housing (1) of the ultrasound meter and pushed into the said housing as one unit.

6. Ultrasound meter according to one of the preceding claims,
**characterized in that**
the ultrasonic transducer (2) or the ultrasonic transducers is or are located in the housing (1) of the ultrasound meter.

7. Ultrasound meter according to one of the preceding claims,
**characterized in that**
the deflection mirror holder (8) is surrounded by at least one, preferably two, sealing rings (23, 24).

## Revendications

1. Compteur à ultrasons destiné à déterminer le débit de passage d'un fluide en écoulement, en particulier d'un liquide ou d'un gaz, et présentant
un boîtier allongé (1) qui est traversé par le fluide,
un parcours de mesure disposé à l'intérieur du boîtier (1) et sur lequel une mesure de temps de passage et en particulier une mesure différentielle de temps de passage peut être exécutée,
au moins un convertisseur d'ultrasons,
au moins un miroir de renvoi (5, 6) au moyen duquel les ondes ultrasonores du convertisseur d'ultrasons sont déviées et
un support (8) de miroir de renvoi configuré pour être inséré axialement dans le boîtier (1),
**caractérisé en ce que**
le support (8) de miroir de renvoi est constitué de deux moitiés aptes à être assemblées dans le sens de la longueur du boîtier (1) et
**en ce que** le miroir de renvoi (5, 6) est inséré entre les moitiés.

2. Compteur à ultrasons selon la revendication 1, **caractérisé en ce que** le support (8) de miroir de renvoi présente des moyens de fixation d'un tube de mesure (7).

3. Compteur à ultrasons selon l'une des revendications précédentes, **caractérisé en ce que** le miroir de renvoi (5) présente deux surfaces de montage parallèles l'une à l'autre.

4. Compteur à ultrasons selon l'une des revendications précédentes, **caractérisé en ce que** le support (8) de miroir de renvoi porte à la fois le premier miroir de renvoi (5) et l'autre miroir de renvoi (6) et **en ce que** le miroir de renvoi est maintenu en position par l'intermédiaire d'un élément de fixation (22) disposé au centre.

5. Compteur à ultrasons selon l'une des revendications précédentes, **caractérisé en ce que** le support (8) de miroir de renvoi, les miroirs de renvoi (5 ou 6) et le tube de mesure (7) peuvent être insérés et extraits du boîtier (1) du compteur à ultrasons en tant qu'entité.

6. Compteur à ultrasons selon l'une des revendications précédentes, **caractérisé en ce que** le convertisseur (2) d'ultrasons ou les convertisseurs d'ultrasons sont situés dans le boîtier (1) du compteur à ultrasons.

7. Compteur à ultrasons selon l'une des revendications précédentes, **caractérisé en ce que** le support (8) de miroir de renvoi est entouré par au moins une et de préférence par deux bagues d'étanchéité (23, 24).
